# EUROPÄISCHE PATENTSCHRIFT

(11) **EP 2 804 015 B1**
(45) Veröffentlichungstag und Bekanntmachung des Hinweises auf die Patenterteilung: **06.05.2020**
(21) Anmeldenummer: 14159339.2
(22) Anmeldetag: 13.03.2014
(51) Int. Cl.: G01S 15/93, G01S 7/539, G01S 15/42

(54) **Verfahren zur Erfassung von Objekten durch adaptives Beamforming**
Method for detecting objects by adaptive beamforming
Procédé de détection d'objets par formation adaptative de faisceaux

(30) Priorität: 15.05.2013 DE 102013209024
(43) Veröffentlichungstag der Anmeldung: 19.11.2014
(73) Patentinhaber: Robert Bosch GmbH, 70442 Stuttgart (DE)
(72) Erfinder: Gerlach, Andre, 71229 Leonberg-Hoefingen (DE)

(56) Entgegenhaltungen:
- DE-A1-102005 007 917
- DE-A1-102009 047 012
- US-B1- 6 697 642

## Beschreibung

### Stand der Technik

Die Erfindung geht aus einem Verfahren zum Bestimmung von Objekten auf Basis der Reflektion eines wellenartigen Sendeimpulses hervor. Genauer gesagt betrifft die Erfindung ein verbessertes Verfahren zum Erkennen eines Objekts im Umfeld von Erkennungssensorik sowie zur Bestimmung der Entfernung und der Richtung zu diesem Objekt, auch Umfeldsensierung genannt.

Um die Entfernung zu einem Objekt oder Hindernis zu bestimmen werden üblicherweise Sensoren eingesetzt, die ein Signal oder einen Sendeimpuls aussenden und ein vom Objekt reflektiertes Echo des Signals oder Sendeimpulses empfangen. Aus der Laufzeit des Signals oder Sendeimpulses vom Zeitpunkt des Sendens bis zum Empfangen des Echos, also der Reflektion oder zumindest Teilreflektion des Signals oder Sendeimpulses, kann der Abstand zwischen Sensorik und Objekt bestimmt werden. Neben dem Abstand zu dem Objekt interessiert üblicherweise auch die Richtung, in der sich das Objekt befindet, ausgehend von der Sensorik. Insbesondere für Anwendungen im Kraftfahrzeugbereich, also bei einem Einsatz der Sensorik an einem Kraftfahrzeug, ist die Information bezüglich der Richtung eines Objekts im Umfeld des Kraftfahrzeugs sowie auch die Information bezüglich der Entfernung zu diesem Objekt wesentlich, beispielsweise um eine Kollision des Kraftfahrzeugs mit dem Objekt zu verhindern. Das Erfassen und Auswerten dieser Informationen wird auch Objektdetektion oder einfach nur Detektion genannt. Auch im Zusammenhang mit anderen bewegten oder auch stehenden Maschinen, wie zum Beispiel aus dem Bereich der Robotik, aus dem Bereich des Landmaschinebaus oder auch im Bereich des Baumaschinenbaus ist die Detektion von Objekten oder Hindernissen von essentieller Bedeutung, unter anderem zur Nahfelderkennung der Hindernisse bei einer Bewegung der Maschine oder eines Teils der Maschine. Eine Anwendung der Sensorik als technische Unterstützung sehbeeinträchtigter Personen ist ebenfalls denkbar.

Bei der bereits im Kraftfahrzeugbereich bekannten ultraschallbasierten Umfeld- oder Nahfeldsensierung wird von einem Schallwandler Schall üblicherweise oberhalb des Audiofrequenzbereichs in die umgebende Luft abgegeben, von Objekten rückgestreut und von entsprechenden Schallempfängern registriert und die daraus sich ergebende Information bezüglich potentieller Hindernisse ausgewertet. Primäres Ziel ist dabei die Vermeidung von Kollisionen mit Objekten in der näheren Umgebung und das Ermitteln von Umgebungsdaten für Karten als Grundlage für Bahnplanungen des Kraftfahrzeugs, so zum Beispiel beim Einparken des Kraftfahrzeugs in einem von Hindernissen umgebene Parklücke. Bekannt sind zu diesem Zweck als Schallwandler bevorzugt Ultraschallwandler, die beispielsweise auf Basis von Piezoelementen ausgeführt sind, aber auch elektrostatische Wandler, die aus einer Anordnung von zwei mit kleinem Abstand gegenüberliegenden Kondensatorplatten bestehen und gegebenenfalls im Rahmen von Halbleiterprozessen als MEMS-Wandler ausgeführt sind.

Neben Triangulationsverfahren zur Richtungsbestimmung der Objekte können insbesondere auch bereits bekannte "Beamforming"-Verfahren zur Signalverarbeitung eingesetzt werden. Unter dem Begriff "Beamforming" versteht man in der Physik generell die Formung der Richtcharakteristik des "Beams", also des Signalstreufelds einer Anordnung aus mehreren Sendern, eines sogenannten Sender-Arrays. Beamforming, oder auch Richtungsbildung genannt, betrifft demnach die Veränderung der Bewertung der einzelnen Sensorsignale, um die Hauptkeule des Sensorsignalfelds in eine andere Richtung zu steuern, ohne die Sensorik selbst räumlich neu auszurichten. Die Richtcharakteristik bezeichnet dabei die Winkelabhängigkeit der Stärke empfangener oder gesendeter Signalwellen, meist bezogen auf die Empfindlichkeit beziehungsweise Intensität in Hauptrichtung, das heißt in 0°-Richtung. Bei Sender-Beamforming-Verfahren, auch aktive Beamforming-Verfahren genannt, wird die Phase mehrerer parallel aktiver Sender in einem Sender-Array genau aufeinander abgestimmt, um den Ausfallwinkel der sogenannten Hauptkeule der Überlagerung der gesendeten Signale zu steuern. Hingegen bei Empfänger-Beamforming-Verfahren, auch passive Beamforming-Verfahren genannt, wird die Phaseninformation mehrerer parallel aufzeichnender Empfänger in einem sogenannten Empfänger-Array genutzt, um den Einfallwinkel eines empfangenen Signals zu rekonstruieren. Bei vielen Verfahren zum Beamforming ist die Größe eines Arrays, insbesondere der Durchmesser des Arrays, bei einem aktiven Verfahren bestehend aus mehreren parallel aktiven Sendern beziehungsweise bei einem passiven Verfahren bestehend aus mehrerer parallel aufzeichnenden Empfängern von Bedeutung, da die Größe des Arrays sowohl die Ausweitung eines gesendeten Signals bestimmt als auch die Winkeltrennfähigkeit für ein empfangenes Signal. Weiterhin ist der Abstand zwischen den einzelnen Arrayelementen, das heißt den parallel aufzeichnenden Empfängern beim passiven Beamforming oder den parallel aktiven Sendern beim aktiven Beamforming, von Bedeutung. Bei den meisten Verfahren zum Beamforming sollte dieser Elementabstand kleiner oder gleich der halben Wellenlänge des Signals sein, da sonst Nebenkeulen in der Sende- oder Empfangscharakteristik in der Größenordnung der Hauptkeule erzeugt werden, die zu Mehrdeutigkeiten in der Detektion führen können. Betrachtet werden hier insbesondere Arrays, die aus mindestens zwei Schallwandlern bestehen. Wie vorhergehend bereits erwähnt, beträgt bei solchen Array-Anordnungen der Abstand von zwei oder mehr Einzelwandlern untereinander typischerweise jeweils weniger als die halbe Luftschallwellenlänge des Signals. Eine Array-Anordnung bietet im Vergleich zu Einzelelement-Wandlern erweiterte Möglichkeiten der Signalverarbeitung und ist in Verbindung mit einer geeigneten Array-Signalverarbeitung besonders vorteilhaft in komplexen Umgebungen mit den damit verbundenen komplexen Schallfeldern, wobei insbesondere die genaue Position von mehreren zu detektierenden Objekten, die unter anderem auch als Schallrückstreuer bezeichnet werden, das heißt Abstand und Winkel der Schallrückstreuer zur Sensorik, mit einer einzelnen Aufnahme ermittelt werden kann. Die Einzelelemente können getrennt als Schallsender und als Schallempfänger oder aber sowohl als Sender als auch Empfänger betrieben werden. Dabei sind verschiedene Kombinationen möglich, unter anderem die Verwendung aller Wandler als Schallempfänger und eine Untergruppe der Wandler als nur Sender oder als Sender und Empfänger.

Für die Beschallungsaufgabe zur Detektion von Objekten werden aufgrund von baulichen Schwierigkeiten und auch kostentechnischen Aspekten bis dato in der Fahrzeugtechnik in der Regel Einzel-Schallwandler verwendet, die eine ihnen fest zugeordnete Richtcharakteristik aufweisen. Die Wahl der Abmessungen der Einzel-Schallwandler bestimmt dabei deren inhärente Richtcharakteristik. Werden nun bei der Detektion von Objekten im Nahfeld eines Kraftfahrzeugs mehrere verschiedene Richtcharakteristiken gewünscht, müssen mehrere verschiedene Einzel-Schallwandler eingesetzt werden.

Beim Einsatz von Ultraschall-Arrays für die Umfeldsensierung im Kraftfahrzeugbereich wird für den Schallempfang mittlerweile verstärkt das Beamforming eingesetzt. Dazu wird die Umgebung möglichst vollständig beschallt, auch als "Ausleuchten" der Umgebung bezeichnet, wobei alle Empfangselemente das Zeitsignal der Rückstreuung aufzeichnen und der Beamforming-Algorithmus beinahe in Echtzeit die geometrischen Informationen der Rückstreuer ermittelt. Empfänger-Beamforming-Verfahren führen eine räumliche Filterung der von den Empfangselementen empfangenen Signale durch. Einfallende Echos überlagern sich physikalisch zu den einzelnen Signalen, die von den räumlich getrennten Empfangselementen empfangen werden können. Die empfangen Signale werden dann üblicherweise elektronisch unterschiedlichen Verstärkungs- oder Dämpfungsfaktoren unterworfen, abhängig davon in welche Richtung man das Array steuern will. Ein Verbund mehrerer Schallwandler im Array ermöglicht demnach eine Schallaussendung mit sehr unterschiedlichen Richtwirkungen durch Anwendung des Beamforming. Die Richtwirkungen sind, zumindest innerhalb gewisser Grenzen, beliebig einstellbar und adaptiv, also je nach Anforderung, umschaltbar. Hier ist anzumerken, dass bei Verwendung von separaten klassischen Einzel-Schallwandlern für jede Richtwirkung jeweils ein Einzel-Schallwandler erforderlich ist. Im Vergleich zu klassischen Einzel-Schallwandlern können nicht nur einzelne Richtwirkungen entsprechend der Anzahl verschieden dimensionierter Schallsender sondern sehr viele unterschiedliche Richtwirkungen erzeugt werden. Durch die Wahl enger Richtwirkungen wird der Schall auf kleine Gebiete gesendet und damit die Reichweite bei der Objekterkennung erhöht. Im Falle von passiven Empfänger-Beamforming-Verfahren werden dabei die verschiedenen Empfangsrichtungen häufig softwaretechnisch durchlaufen, während andere Verfahren basierend auf einer Schätzung der Anzahl der empfangenen Echos auch die verschiedenen Richtungen direkt schätzen können. In beiden Fällen werden die Relativpositionen der Empfangselemente und die Wellenlänge des gesendeten Pulses herangezogen. In ihrer einfachsten, klassischen Form werden komplexe Gewichtungen auf die Signale der Empfangselemente angewendet, so dass sich Signale, die aus der gewünschten Richtung stammen, konstruktiv interferieren, wohingegen Signale aus anderen Richtungen destruktiv interferieren. Für eine vollständige Abdeckung des gewünschten Erfassungsgebietes muss eine hinreichende Zeit zur Verfügung stehen, damit der Schall beim Senden und Rücklaufen das Gebiet vollständig durchlaufen kann. Ist beispielsweise das Erfassungsgebiet ein Halbkreis mit 5m Radius, so muss der Schall maximal 10m, also 2x 5m (Hin- und Zurück) durchlaufen. Bei einer Schallgeschwindigkeit von 343 m/s in Umgebungsluft sind dazu in etwa 30ms Zeit erforderlich.

Als ein Beispiel des Stands der Technik für ein Empfänger-Beamforming-Verfahren ist aus der DE 10 2009 047 012 A1 ein Verfahren zur Erfassung von Objekten mittels Ultraschall bekannt, in dem von Objekten reflektierte Wellen als Empfangssignal von mindestens einem Empfänger detektiert werden. Das Empfangssignal der reflektierten Welle wird in zeitliche Segmente aufgeteilt, und aus den einzelnen Segmenten gewonnene Informationen werden zur Bestimmung einer Objekthypothese herangezogen. Weiterhin werden Informationen über einen bestimmten Zeitraum innerhalb eines definierten Grenzbereiches ermittelt, um weitere Aussagen über den Informationsgehalt des Empfangssignals zu erfassen. Dabei sind sowohl Sender als auch Empfänger als Sensor-Array gestaltet.

Weiterhin ist es auch bereits versucht worden, für den Sendebetrieb ebenfalls das Beamforming anzuwenden, wobei der gesamte Erfassungsbereich in viele Segmente unterteilt wird, die einzeln zu beschallen sind und zu denen jeweils einzeln das Eintreffen der Rückstreuung abgewartet werden muss. Derartig passive Sender-Beamforming-Verfahren funktionieren ansatzweise entsprechend wie die oben beschriebenen Empfänger-Beamforming-Verfahren, nur in umgekehrter Art und Weise. In diesem Falle addieren sich die von den Senderelementen gesendeten Signale in der gewünschten Richtung und Signale aus anderen Richtungen heben sich gegenseitig auf. Dadurch liefern Objekte in Blickrichtung ein stärkeres Signal als Objekte in anderen Richtungen. Die Anzahl der Segmente ergibt sich aus den Parametern des jeweiligen Beamforming-Algorithmus, so könnten beispielsweise 10°-Segmente festgelegt werden, wodurch es bei dem oben bereits diskutierten Halbkreis, der 180° Winkelgrad entspricht, zu 18 Segmenten, und es muss entsprechend eine akkumulierte Schalllaufzeit von 18x30ms = 0,24s abgewartet werden. Für sehr viele technische Anwendungen ist diese lange Wartezeit bis zur vollständigen Erfassung nicht akzeptabel, insbesondere wenn sich die Umgebung durch die Bewegung von zu erfassenden Objekten dynamisch verändert, wie es beispielsweise bei einem Kraftfahrzeug in der Regel der Fall ist.

Das Dokument US 6 697 642 B1 beschreibt ein Verfahren, um eine mobile Station bzw. eine Richtstrahlantenne derart in Bezug auf eine Basisstation auszurichten, dass eine optimale Signalqualität für die Kommunikation erreicht wird. In einem ersten Verfahrensschritt kann hierbei in einer inaktiven Periode der Kommunikationseinrichtung, ein ungerichteter Sendestrahl von einem Sender ausgesandt und das von einem Empfänger empfangene Signal hinsichtlich seiner Qualität beurteilt werden. Hierbei werden auch Reflektionen und Einflussnahme auf das Signal durch in der Umgebung vorhandene berücksichtigt. Das empfangene Signal wird hierbei in Segmente aufgeteilt.

Das Dokument DE 10 2009 047 012 A1 beschreibt ein Empfänger-Beaming-Verfahren zur Erfassung von Objekten, bei dem mindestens ein Sensor einen Sendeimpuls als Welle emittiert. Dieser Sendeimpuls wird von Objekten im Ausbreitungsraum zumindest teilweise reflektiert und die reflektierte Welle von mindestens einem Empfänger als Empfangssignal detektiert. Das Empfangssignal der reflektierten Welle wird hierbei in Segmente aufgeteilt, wobei aus den einzelnen Segmenten Informationen gewonnen werden, die zur Bestimmung einer Objekthypothese herangezogen werden.

Das Dokument DE 10 2005 007 917 A1 beschreibt ein Kraftfahrzeug-Radarsystem zum Erfassen von Entfernungen und Winkellagen von Objekten relativ zu einem Fahrzeug. Hierbei wird eine Überdeckung einer Sendekeule und eines Empfangswinkelbereichs sequentiell in verschiedene Raumrichtungen gerichtet, für jede Raumrichtung die Winkellage eines innerhalb der Überdeckung erfassten Objektes bestimmt und Ergebnisse aus verschiedenen Überdeckungen zu einem nach Raumrichtungen differenzierten Gesamtergebnis zusammengefügt.

### Offenbarung der Erfindung

Das erfindungsgemäße Verfahren mit den Merkmalen des unabhängigen Anspruchs 1 hat gegenüber der Offenbarung des vorhergehend genannten Stands der Technik den Vorteil, dass eine lange Wartezeit bei der Anwendung des passiven Empfänger-Beamforming vermieden werden kann, und dass die statische Sicherheit sowie die Genauigkeit der erfassten Daten, also die Detektionsgenauigkeit von Objekten im Nahfeld erhöht werden kann. Genauer gesagt geschieht dies durch ein Verfahren zur Erfassung von Objekten, wobei mindestens ein Sender zur Ausgabe mindestens eines wellenförmigen Sendeimpulses vorgesehen ist, der von einem Objekt im Ausbreitungsraum des Sendeimpulses zumindest teilweise reflektiert werden kann, und wobei mindestens ein Empfänger zum Empfang des reflektierten Sendeimpulses als Empfangssignal vorgesehen ist. Das Verfahren umfasst ferner einen Schritt des Ausgebens eines ungerichteten Sendeimpulses, einen Schritt des Empfangens des zumindest teilweise reflektierten Sendeimpulses als erstes Empfangssignal und Aufteilen des ersten Empfangssignals in einzelne Segmente, einen Schritt des Bestimmens des Vorhandenseins eines Objekts in dem Ausbreitungsraum des Sendeimpulses auf Basis von Informationen aus den einzelnen Segmenten, und, bei Vorhandensein eines Objekts in dem Ausbreitungsraum des Sendeimpulses, einen Schritt des Ausgebens eines gerichteten Sendeimpulses, der durch Beamforming auf das Objekt gerichtet ist, und des Empfangens des reflektierten Sendeimpulses als weiteres Empfangssignal. Kern der Erfindung ist demnach, dass das erste Empfangssignal in Segmente aufgeteilt wird und diese ausgewertet werden, um eine erste "grobe" Detektion eines Objekts zu erzielen, und dass anschließend ein weiterer Sendeimpuls ausgegeben wird, der durch Beamforming-Segmentierung auf das durch die erste Detektion erfasste Objekt gerichtet ist, wobei das aus dem weiteren Sendeimpuls durch das Objekt reflektierte Empfangssignal ebenfalls in Segmente aufgeteilt wird und diese ausgewertet werden, um eine zweite "feinere" Detektion des Objekts zu erzielen. Dadurch wird also ein Verfahren bereitgestellt, bei dem durch Verwendung nur weniger Beschallungen mit unterschiedlicher Segmentierung eine verbesserte Erfassung von Objekten im Umfeld der Sensorik erreicht wird. Das mehrstufige Verfahren besteht also kurz gesagt in dem vollständigen "Ausleuchten" des gesamten Erfassungsgebiets durch Beschallen mit einem ungerichteten Sendeimpuls eines Schallwandler-Arrays im ersten Schritt, und optional bei Erkennen eines oder mehrerer Objekte aufgrund der Auswertung der reflektierten Sendeimpulswelle in dem "Nachbeleuchten" des Objekts oder der Objekte mit einer oder mehrerer zielgerichteter Beschallungen.

In einer bevorzugten Ausführung des erfindungsgemäßen Verfahrens umfasst der Schritt des Ausgebens eines durch Beamforming auf das Objekt gerichteten Sendeimpulses ein Aufteilen des gerichteten Sendeimpulses in Segmente unter Anwendung eines Beamforming-Algorithmus. Ein derartiger Beamforming-Algorithmus kann beispielsweise eine Modifikation eines bekannten Time-Delay-and-Sum-Beamforming-Algorithmus sein. Vorzugsweise sind demnach die einzelnen Segmente des gerichteten Sendeimpulses zeitlich unterteilt. Eine zeitliche Unterteilung des Impulses ist dabei in zeitlich gleich lange und/oder ungleich lange Segmente denkbar. Dadurch kann der gerichtete Sendeimpuls in fest definierte Teilsignale aufgeteilt werden, wodurch eine gezielte Beobachtung von signifikanten Merkmalen der reflektierten Teilsignale ermöglicht wird. Um eine unnötige gezielte Beobachtung uninteressanter "leerer" Signalsegmente, die keinen oder keinen hohen Informationsgehalt haben, zu vermeiden, ist es möglich, diese bei der Auswertung wegfallen zu lassen, ohne eine wesentliche Reduzierung der Gesamtinformationen des Empfangssignals zu erhalten. Dadurch kann eine effiziente und schnelle Bearbeitung und Untersuchung des Empfangssignals gewährleistet werden. Die Möglichkeit unterschiedliche Richtcharakteristiken im Sendebetrieb zu erzeugen, beruht folglich auf der Verwendung eines Array-Senders, das heißt mehrere Einzelwandler im Sender-Verbund, und der Anwendung eines aus der Literatur bekannten Beamforming-Algorithmus.

In einer weiteren bevorzugten Ausführung des erfindungsgemäßen Verfahrens wird der Schritt des Aufteilens des ersten Empfangssignals in einzelne Segmente unter Anwendung eines Beamforming-Algorithmus zur Segmentierung des ersten Empfangssignals ausgeführt. Ein derartiger Beamforming-Algorithmus kann beispielsweise ein bekannter Time-Delay-and-Sum-Beamforming-Algorithmus sein. Vorzugsweise sind demnach die einzelnen Segmente des gerichteten Sendeimpulses zeitlich unterteilt. Eine zeitliche Unterteilung des ersten Empfangssignals ist dabei in zeitlich gleich lange und/oder ungleich lange Segmente denkbar. Dadurch kann das erste Empfangssignal der reflektierten Welle in fest definierte Teilsignale aufgeteilt werden, so dass eine Untersuchung der Teilsignale erleichtert wird. Zudem ist dadurch eine gezielte Beobachtung von signifikanten Merkmalen des ersten Empfangssignals möglich. Um eine gezielte Beobachtung uninteressanter "leerer" Signalsegmente, die keinen oder keinen hohen Informationsgehalt haben, ist es möglich, diese bei der Auswertung wegfallen zu lassen, ohne eine wesentliche Reduzierung der Gesamtinformationen des ersten Empfangssignals zu erhalten. Dadurch kann eine effiziente und schnelle Bearbeitung und Untersuchung des in Segmente zerlegten ersten Empfangssignals gewährleistet werden.

Weiter vorzugsweise werden die Informationen aus den einzelnen Segmenten des ersten Empfangssignals und Informationen aus dem weiteren Empfangssignal zur Bildung einer Objekthypothese herangezogen, die insbesondere Auskunft über die Art und/oder die Oberflächeneigenschaften und/oder den Typ des Objektes gibt. Da der Informationsgehalt der zeitlichen Segmente üblicherweise durch Untersuchungen der Kurvenanpassung für die Einhüllende der Amplitude und/oder über die Halbhöhenbreite und/oder der eigentlichen Impulshöhe ermittelt wird, kann die Form eines zeitlichen Segmentes Auskunft über die Geometrie und Oberflächenbeschaffenheit eines Objektes geben. Zusätzlich, mit der zeitlichen Information über das Abklingverhalten des jeweiligen Empfangssignals, wird damit eine Möglichkeit geschaffen, das detektierte Objekt genauer zu identifizieren. Somit spiegeln diese Informationen indirekt die Wechselwirkung einer Schallwelle mit dem Objekt wider und können zur sicheren Charakterisierung des Objekts eingesetzt werden.

Weiterhin ist es bei dem erfindungsgemäßen Verfahren vorzuziehen, dass bei Vorhandensein mehrerer Objekte in dem Ausbreitungsraum des Sendeimpulses mehrere gerichtete Sendeimpulse ausgegeben werden, von denen jeder durch Aufteilen in Segmente unter Anwendung eines Beamforming-Algorithmus auf jeweils eines der Objekte ausgerichtet ist. Vorzugsweise wird demnach der Schritt des Ausgebens eines durch Beamforming auf das Objekt gerichteten Sendeimpulses in ein Ausgeben mehrerer durch Beamforming auf die jeweiligen Objekte ausgerichteter Sendeimpulse aufgeteilt beziehungsweise der Schritt des Ausgebens eines durch Beamforming auf das Objekt gerichteten Sendeimpulses wird für jedes einzelne Objekt wiederholt. Ein Aufteilen des gerichteten Sendeimpulses in Segmente erfolgt wiederum unter Anwendung eines Beamforming-Algorithmus. Ein derartiger Beamforming-Algorithmus kann, wie bereits oben beschrieben, eine Modifikation eines bekannten Time-Delay-and-Sum-Beamforming-Algorithmus sein. Vorzugsweise sind demnach die einzelnen Segmente der gerichteten Sendeimpulse zeitlich unterteilt. Eine zeitliche Unterteilung der Impulse ist dabei in zeitlich gleich lange und/oder ungleich lange Segmente denkbar. Dadurch können die gerichteten Sendeimpulse in fest definierte Teilsignale aufgeteilt werden, wodurch eine gezielte Beobachtung von signifikanten Merkmalen der reflektierten Teilsignale ermöglicht wird. Um eine unnötige gezielte Beobachtung uninteressanter "leerer" Signalsegmente, die keinen oder keinen hohen Informationsgehalt haben, zu vermeiden, ist es möglich, diese bei der Auswertung wegfallen zu lassen, ohne eine wesentliche Reduzierung der Gesamtinformationen des Empfangssignals zu erhalten. Dadurch kann eine effiziente und schnelle Bearbeitung und Untersuchung des Empfangssignals gewährleistet werden.

Was den Aufbau des Senders beziehungsweise des Empfängers betrifft, ist es bei dem erfindungsgemäßen Verfahren vorzuziehen, dass der Sender aus zumindest einem Schallwandler-Array aufgebaut ist und/oder der Empfänger aus zumindest einem Schallwandler-Array aufgebaut ist. Sender und Empfänger können aber auch aus mehreren Schallwandler-Arrays aufgebaut sein. Das erfindungsgemäße Verfahren kommt weiter vorzugsweise insbesondere zur Umfelderfassung eins Kraftfahrzeugs zur Anwendung. In diesem Fall sind der mindestens eine Sender und der mindestens eine Empfänger an der Außenhaut des Kraftfahrzeugs vorgesehen, um eine möglichst gleichmäßige Ausleuchtung des gesamten Umfelds des Kraftfahrzeugs zu ermöglichen. Weiter vorzugsweise decken Sender und Empfänger durch gezielte Anordnung an der Außenhaut des Kraftfahrzeugs rund um das Kraftfahrzeug herum das gesamte Umfeld, insbesondere das gesamte Nahfeld des Kraftfahrzeugs ab. Das erfindungsgemäße Verfahren beschallt demnach bei der Verwendung bei einem Kraftfahrzeug bei dem Schritt des Ausgebens des ungerichteten Sendeimpulses vorzugsweise das gesamte erreichbare Umfeld des Kraftfahrzeugs.

Anhand des vorhergehend beschriebenen erfindungsgemäßen Verfahrens ist es folglich möglich, ein Verfahren zur Detektion eines Objekts anpassbar an das Auftreten und die Anzahl von Objekten im Umfeld der Sensorik zu machen. Das erfindungsgemäße Verfahren kann demnach als "adaptiv" bezeichnet werden. Diese Adaptivität ist hier aus der Funktion der Verfahrensanwendung motiviert. Eine Variante der adaptiven Funktion ist die Beschallung des Gesamtgebietes mit einer ungerichteten Schallabstrahlung im ersten Schritt und einer gerichteten Nachbeschallung eines oder mehrerer ausgewählter Gebiete beziehungsweise Sektoren im zweiten Schritt kann als "bimodaler" Sendebetrieb bezeichnet werden. Die Auswahl der nachzubeschallenden Gebiete kann aufgrund verschiedener Umstände erfolgen, wie zum Beispiel aufgrund der Notwendigkeit der Erhöhung der statischen Sicherheit zur Erkennung eines Objektes, wie es beispielsweise für schwach ruckstreuende Objekte wichtig ist, oder aber aufgrund der Notwendigkeit der Erhöhung der Genauigkeit der Bestimmung der Koordinaten eines ausgewählten Objektes, oder aber aufgrund der Verarbeitung von Informationen aus einem anderen Umgebungserfassungsmodell, erhalten beispielsweise durch eine Videokamera, ein Radarsystem, eine virtuelle Karte oder dergleichen, und gezielte Ergänzung mit Informationen aus dem Ultraschallsensorsystem. Als weitere Variante der adaptiven Funktion gilt die Umschaltung der Richtwirkung auf Grund spezifischer Funktionsanforderungen; beispielsweise erfordern unterschiedliche Funktionen die Überwachung unterschiedlich großer Gebiete. In einem Fahrzeug sind zu verschiedenen Zeiten verschiedene Funktionen mit unterschiedlichen Funktionsanforderungen aktiv, unter anderem die Funktion der Parklückenvermessung, die eine schmale gerichtete Beschallung mit hoher Reichweite zur Seite erfordert, oder aber die Funktion der Toter-Winkel-Überwachung, die eine mittelmäßig gerichtete Beschallung nach schräg hinten erfordert, oder aber die Funktion des Heck-Stopp-Manövers, die die vollständige Beschallung des Fahrzeugrückraumes erfordert.

### Kurze Beschreibung der Zeichnungen

Eine bevorzugte Ausführungsform der Erfindung ist in den Zeichnungen schematisch dargestellt und in der nachfolgenden genauen Beschreibung der bevorzugten Ausführungsform näher erläutert.

Es zeigen:
Fig. 1 ein Ablaufdiagramm eines erfindungsgemäßen Verfahrens gemäß der bevorzugten Ausführungsform;
Fig. 2 ein Schaubild einer ungerichteten Signalausbreitung; und
Fig. 3 ein Schaubild einer gerichteten Signalausbreitung.

### Bevorzugte Ausführungsform der Erfindung

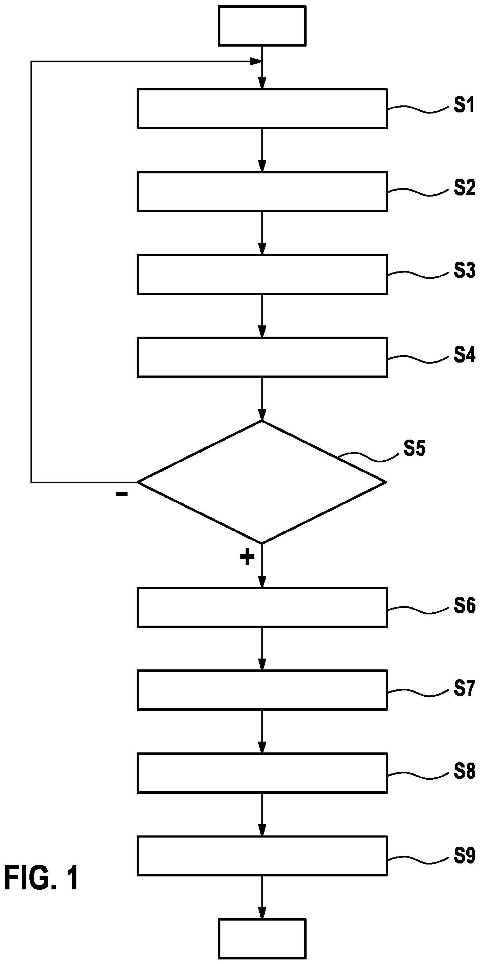

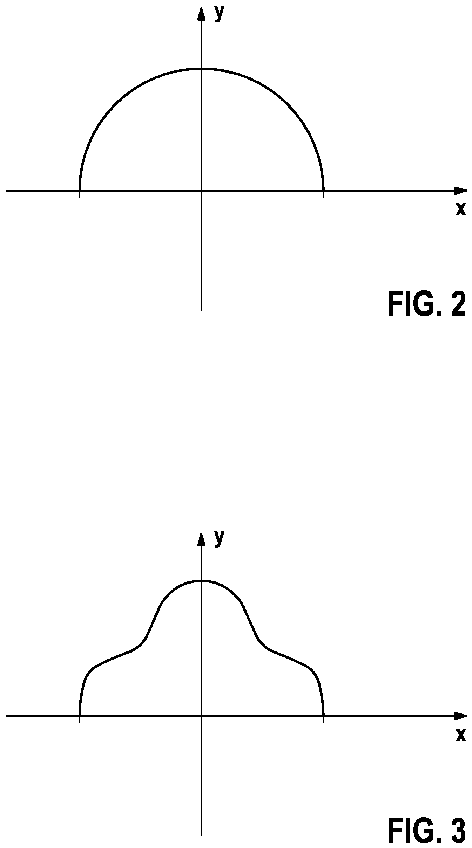

Ein Verfahren gemäß der bevorzugten Ausführungsform ist in Fig. 1 dargestellt. Nach dem Start des erfindungsgemäßen Verfahrens wird in Schritt S1 ein ungerichteter Sendeimpuls ausgegeben, der dazu dient, möglichst das gesamte Umfeld der den Impuls ausgebenden Sensorik zu beschallen. Ein Beispiel eines ungerichteten Sendeimpulses mit gleichmäßiger Beschallung und großem Öffnungswinkel ist in Fig. 2 gezeigt, wobei der Schnittpunkt der x-Achse und der y-Achse den Ort der Sendesensorik bezeichnet. Der in Fig. 2 gezeigte Halbkreis stellt den gleichmäßigen Beschallungsradius des Sendeimpulses dar.

Das Verfahren geht anschließend auf Schritt S2 über, bei dem ein erstes Empfangssignal von der Sensorik empfangen wird, vorausgesetzt, der Sendeimpuls wird von der Umgebung beziehungsweise von einem Objekt in der beschallten Umgebung reflektiert und ein Teil der Sendeimpulswelle wird dadurch an die Sensorik zurückgeschickt. In Schritt S3 wird das erfasste Empfangssignal anhand eines Beamforming-Algorithmus in zeitlich unterteilte Segmente aufgeteilt. Das Verfahren geht anschließend zu Schritt S4 über, bei dem die einzelnen Segmente des ersten Empfangssignals ausgewertet werden, also die Informationen bezüglich des reflektierenden Objekts beziehungsweise der reflektierenden Umgebung ausgewertet werden. Auf Basis dieser Auswertung wird in Schritt S5 bestimmt, ob in der beschallten Umgebung der Sensorik ein Objekt, oder auch mehrere Objekte, vorhanden sind. Falls in Schritt S5 kein Objekt in der beschallten Umgebung festgestellt wird, die Frage auf das Vorhandensein eines Objekts demnach mit NEIN beantwortet wird, geht das Verfahren zurück zu Schritt 1, bei dem erneut ein ungerichteter Sendeimpuls die Umgebung der Sensorik beschallt. Falls ein Objekt in Schritt S5 festgestellt wird, die Frage auf das Vorhandensein eines Objekts demnach mit JA beantwortet wird, dann geht das Verfahren auf Schritt S6 über, bei dem ein durch einen Beamforming-Algorithmus ausgerichteter Sendeimpuls von der Sensorik ausgegeben wird, wobei dieser, oder besser wobei auf das erfasste Objekt beziehungsweise in Richtung des Segments des erfassten Objekts gerichtet ist. Fig. 3 zeigt ein Beispiel eines gerichteten Sendeimpuls mit gezielter Beschallung, wobei, ähnlich wie in Fig. 2, der Schnittpunkt der x-Achse und der y-Achse den Ort der Sendesensorik bezeichnet. Der in Fig. 3 gezeigte ausgebeulte Halbkreis stellt den ungleichmäßigen Beschallungsradius des Sendeimpulses dar, der in Richtung der y-Achse verstärkt ausgerichtet ist und damit in dieser Richtung eine hohe Reichweite erlangt. Die Ausbeulung des Sendeimpulsradius, das heißt der verstärkte oder verdichtete Impulsbereich wird als Hauptkeule bezeichnet.

Durch den gerichteten Sendeimpuls wird in Schritt S7 des erfindungsgemäßen Verfahrens ein starkes reflektiertes weiteres Empfangssignal empfangen, das wiederum in Schritt S8 in Segmente unterteilt wird. Diese Segmente, zusammen mit den in Schritt S3 bereits erfassten Segmenten, werden in Schritt S9 ausgewertet, wodurch aufgrund der erhöhten Datendichte eine Detektion des Objekts mit hoher Präzession erfolgen kann. Alternativ dazu können in Schritt S9 nur die Segmente des weiteren Empfangssignals ausgewertet werden.

## Patentansprüche

1. Verfahren zur Erfassung von Objekten, wobei mindestens ein Sender mindestens einen wellenförmigen Sendeimpuls emittiert, der von einem Objekt im Ausbreitungsraum des Sendeimpulses zumindest teilweise reflektiert wird, und der reflektierte Sendeimpuls von mindestens einem Empfänger als Empfangssignal detektiert wird, welches in Segmente aufgeteilt wird, und das Verfahren die folgenden Schritte umfasst:
- Ausgeben eines ungerichteten Sendeimpulses (S1),
- Empfangen des zumindest teilweise reflektierten Sendeimpulses als erstes Empfangssignal (S2) und Aufteilen des ersten Empfangssignals in einzelne Segmente (S3),- Bestimmen des Vorhandenseins eines Objekts in dem Ausbreitungsraum des Sendeimpulses auf Basis von Informationen aus den einzelnen Segmenten (S4, S5),
- Ausgeben eines gerichteten Sendeimpulses auf das vorhandene Objekt (S6), der unter Anwendung eines Beamforming-Algorithmus in Segmente aufgeteilt ist und Empfangen des reflektierten Sendeimpulses als weiteres Empfangssignal (S7),
**dadurch gekennzeichnet, dass** das Verfahren zur Umfelderfassung eines Kraftfahrzeugs zur Anwendung kommt und der mindestens eine Sender und der mindestens eine Empfänger an der Außenhaut des Kraftfahrzeugs vorgesehen sind..

2. Verfahren nach Anspruch 1, wobei die einzelnen Segmente des gerichteten Sendeimpulses zeitlich unterteilt sind.

3. Verfahren nach einem der vorangehenden Ansprüche, wobei der Schritt des Aufteilens des ersten Empfangssignals in einzelne Segmente (S3) unter Anwendung eines Beamforming-Algorithmus zur Segmentierung des ersten Empfangssignals ausgeführt wird.

4. Verfahren nach Anspruch 3, wobei die einzelnen Segmente des ersten Empfangssignals zeitlich unterteilt sind.

5. Verfahren nach einem der vorangehenden Ansprüche, wobei die Informationen aus den einzelnen Segmenten des ersten Empfangssignals und Informationen aus dem weiteren Empfangssignal zur Bildung einer Objekthypothese herangezogen werden, die insbesondere Auskunft über die Art und/oder die Oberflächeneigenschaften und/oder den Typ des Objektes gibt.

6. Verfahren nach einem der vorangehenden Ansprüche, wobei bei Vorhandensein mehrerer Objekte in dem Ausbreitungsraum des Sendeimpulses mehrere gerichtete Sendeimpulse ausgegeben werden, von denen jeder durch Aufteilen in Segmente unter Anwendung eines Beamforming-Algorithmus auf jeweils eines der Objekte ausgerichtet ist.

7. Verfahren nach einem der vorangehenden Ansprüche, wobei der Sender aus zumindest einem Schallwandler-Array aufgebaut ist und/oder der Empfänger aus zumindest einem Schallwandler-Array aufgebaut ist.

8. Verfahren nach einem der Ansprüche 1 bis 7, wobei bei dem Schritt des Ausgebens des ungerichteten Sendeimpulses (S1) das gesamte erreichbare Umfeld des Kraftfahrzeuges beschallt wird.

## Claims

1. Method for detecting objects, wherein at least one transmitter emits at least one wave-shaped transmission pulse that is at least partly reflected by an object in the propagation space of the transmission pulse, and the reflected transmission pulse is detected as a received signal by at least one receiver, said received signal being split into segments, and the method comprises the following steps:
- outputting an omnidirectional transmission pulse (S1),
- receiving the at least partly reflected transmission pulse as a first received signal (S2) and splitting the first received signal into individual segments (S3),
- determining the presence of an object in the propagation space of the transmission pulse on the basis of information from the individual segments (S4, S5),
- outputting a directional transmission pulse to the object that is present (S6), which transmission pulse is split into segments using a beamforming algorithm, and receiving the reflected transmission pulse as a further received signal (S7),
**characterized in that** the method is used for detecting the surroundings of a motor vehicle, and the at least one transmitter and the at least one receiver are provided on the outer skin of the motor vehicle.

2. Method according to Claim 1, wherein the individual segments of the directional transmission pulse are divided over time.

3. Method according to either of the preceding claims, wherein the step of splitting the first received signal into individual segments (S3) is carried out using a beamforming algorithm to segment the first received signal.

4. Method according to Claim 3, wherein the individual segments of the first received signal are divided over time.

5. Method according to one of the preceding claims, wherein the information from the individual segments of the first received signal and information from the further received signal are used to form an object hypothesis that in particular provides information about the type and/or the surface properties and/or the type of the object.

6. Method according to one of the preceding claims, wherein the presence of multiple objects in the propagation space of the transmission pulse results in multiple directional transmission pulses being output, each of which is aligned with a respective one of the objects by splitting it into segments using a beamforming algorithm.

7. Method according to one of the preceding claims, wherein the transmitter is constructed from at least one sound transducer array and/or the receiver is constructed from at least one sound transducer array.

8. Method according to one of Claims 1 to 7, wherein the step of outputting the omnidirectional transmission pulse (S1) involves the entire reachable surroundings of the motor vehicle being filled with sound.

## Revendications

1. Procédé pour détecter des objets, au moins un émetteur émettant au moins une impulsion d'émission de forme ondulée qui est au moins partiellement réfléchie par un objet dans l'espace de propagation de l'impulsion d'émission, et l'impulsion d'émission étant détectée par au moins un récepteur en tant que signal reçu, lequel est divisé en segments, et le procédé comprend les étapes suivantes :
- délivrance d'une impulsion d'émission non orientée (S1),
- réception de l'impulsion d'émission au moins partiellement réfléchie en tant que premier signal reçu (S2) et division du premier signal reçu en segments individuels (S3), détermination de la présence d'un objet dans l'espace de propagation de l'impulsion d'émission sur la base d'informations issues des segments individuels (S4, S5),
- délivrance d'une impulsion d'émission orientée sur l'objet présent (S6), laquelle est divisée en segments en appliquant un algorithme de formation de faisceau, et réception de l'impulsion d'émission réfléchie en tant que signal reçu supplémentaire (S7),
**caractérisé en ce que** le procédé est appliqué pour l'acquisition de l'environnement d'un véhicule automobile et l'au moins un émetteur ainsi que l'au moins un récepteur se trouvent ' au niveau de l'enveloppe extérieure du véhicule automobile.

2. Procédé selon la revendication 1, les segments individuels de l'impulsion d'émission orientée étant subdivisés dans le temps.

3. Procédé selon l'une des revendications précédentes, l'étape de division du premier signal reçu en segments individuels (S3) étant exécutée en appliquant un algorithme de formation de faisceau pour la segmentation du premier signal reçu.

4. Procédé selon la revendication 3, les segments individuels du premier signal reçu étant subdivisés dans le temps.

5. Procédé selon l'une des revendications précédentes, les informations issues des segments individuels du premier signal reçu et les informations issues du signal reçu supplémentaire étant utilisées pour former une hypothèse d'objet qui fournit notamment un renseignement sur la nature et/ou les propriétés de surface et/ou le type de l'objet.

6. Procédé selon l'une des revendications précédentes, plusieurs impulsions orientées étant délivrées dans l'espace de propagation de l'impulsion d'émission dans le cas où plusieurs objets sont présents, parmi lesquelles chacune est orientée sur l'un respectif des objets par division en segments en appliquant un algorithme de formation de faisceau.

7. Procédé selon l'une des revendications précédentes, l'émetteur étant constitué d'au moins un réseau de transducteurs acoustiques et/ou le récepteur étant constitué d'au moins un réseau de transducteurs acoustiques.

8. Procédé selon l'une des revendications 1 à 7, la totalité de l'environnement accessible du véhicule automobile étant sonorisé lors de l'étape de délivrance de l'impulsion d'émission non orientée (S1).
